(19) **Europäisches Patentamt**

**European Patent Office**

**Office européen des brevets**

(11) **EP 0 692 859 B1**

(12) **EUROPÄISCHE PATENTSCHRIFT**

(45) Veröffentlichungstag und Bekanntmachung des Hinweises auf die Patenterteilung:
**30.08.2000 Patentblatt 2000/35**

(51) Int Cl.$^7$: **H02J 7/10**

(21) Anmeldenummer: **95115527.4**

(22) Anmeldetag: **02.10.1995**

(54) **Verfahren zur automatischen Anpassung eines Ladegerätes und Ladegerät hierfür**

Method for automatic adaptation of a charger and charger employed therefor

Méthode d'adaptation automatique d'un chargeur et chargeur à cet effet

(84) Benannte Vertragsstaaten:
**AT BE CH DE DK ES FR GB GR IT LI NL SE**

(43) Veröffentlichungstag der Anmeldung:
**17.01.1996 Patentblatt 1996/03**

(73) Patentinhaber: **IMPEX PATRICK WYSS CH-8617 Mönchaltorf (CH)**

(72) Erfinder:
• **Wyss, Patrick CH-4656 Starrkirch (CH)**
• **Fessler, Anton CH-5610 Wohlen (CH)**

• **Meyer, Christian CH-4705 Walliswil-Bipp (CH)**

(74) Vertreter: **Troesch Scheidegger Werner AG Patentanwälte, Siewerdtstrasse 95, Postfach 8050 Zürich (CH)**

(56) Entgegenhaltungen:
**EP-A- 0 265 879     EP-A- 0 460 888**
**EP-A- 0 522 691     DE-A- 3 526 045**

**Beschreibung**

Die vorliegende Erfindung betrifft ein Verfahren nach dem Oberbegriff von Anspruch 1 sowie ein Ladegerät nach demjenigen von Anspruch 6.

Es sind Ladegeräte bekannt, bei denen, flexibel, Akkumulatoren bzw. ladbare Batterien, insbesondere NiCd- oder NiMH-Batterien, mit verschiedenen Nennspannungen, geladen werden können. Dabei wird zum Erhalt der erwähnten Flexibilität, ohne manuelle Nennspannung-abhängige Umstellung an den Ladegeräten, in Kauf genommen, Akkumulatoren oberhalb oder unterhalb eines mittleren Nennspannungsbereiches nicht optimal aufzuladen.

Bei derartigen Ladegeräten ist es nämlich bekannt, eine Ueberwachungseinheit vorzusehen, beispielsweise umfassend einen Ladecontroller-IC des Typs U2402B der Firma Telefunken, woran das zeitliche Verhalten des Ladevorganges anhand einer Ueberwachung der Ladespannung verfolgt wird, um z.B. den Ladevorgang zeitgerecht zu beenden. Dabei ist es üblich, die zweite zeitliche Ableitung, wie dies generell unter dem Begriff der "Gradienten-Ueberwachung" bekannt ist, zu überwachen, welche Grösse es erlaubt, die Bereiche der Top-off-Ladung und Erhaltungs-Ladung am Zeitverlauf der Ladespannung eindeutig zu detektieren.

Wird eine solche Ueberwachung auf zu ladende Akkumulatoren mit unterschiedlichen Nennspannungen angewandt, so wird der erwähnten Ueberwachung eine je nach Nennspannung in einem grossen Bereich variierende, zu überwachende momentane Ladespannung zugeführt.

Nun ist es weiter bekannt, dass elektronische Ueberwachungseinheiten üblicherweise für einen Bereich des zu überwachenden Signals ausgelegt sind, worin die Ueberwachungszuverlässigkeit optimal ist. Liegen zu überwachende Signale in Randbereichen oder ausserhalb dieses Optimalbereiches, so wird gegebenenfalls wohl weiterhin die Ueberwachungsfunktion in gewissem Masse erfüllt, jedoch mit verringerter Genauigkeit.

Aus der EP-A-0 522 691 ist es bekannt, den Verlauf des Ladespannungswertes zu überwachen, über einen logarithmischen Analog/Digital-Wandler. Mittels dieses Wandlers wird der jeweilige Ladespannungswert logarithmiert. 30 Sekunden nach Beginn des Ladevorganges wird die Ladespannung so dämpft, dass sie in den Überwachungsbereich des Logarithmierers zu liegen kommt.

Es ist Aufgabe der vorliegenden Erfindung, ausgehend von einem Verfahren letztgenannter Art bzw. einem Ladegerät genannter Art, das Problem einfacher zu lösen, Akkumulatoren mit unterschiedlichen Nennspannungen gleichermassen optimal zu laden.

Dies wird durch ein Verfahren eingangs genannter Art erreicht, das gemäss Kennzeichen von Anspruch 1 ausgeführt wird.

Durch Nachführen der Verstärkung kontinuierlich oder zeitdiskret, z.B. mindestens zu Beginn eines Ladevorganges, wird auf eine vermutete Nennspannung des eben in Ladung befindlichen Akkumulators geschlossen, und durch entsprechende Verstärkung der überwachten Ladespannung wird das überwachte Signal in den für die Ueberwachung optimalen Signalbereich geschoben. Eine durch Messung zu Beginn des Ladevorganges sich ergebende Vermutung wird vorzugsweise durch folgende Messungen überprüft und gegebenenfalls korrigiert.

Dadurch, dass nämlich wiederholt oder mindestens zwei Mal oder kontinuierlich die erwähnte Nachführung realisiert wird und die Verstärkung nach dem jeweiligen Messresultat festgelegt wird, ergibt sich der Vorteil, dass auch dann, wenn zu Beginn des Ladevorganges die Nennspannung falsch vermutet wurde, beispielsweise aufgrund einer Tiefentladung des in Ladung befindlichen Akkumulators relativ hoher Nennspannung und entsprechende Festlegung der Verstärkung, im weiteren auch Gewichtungsfaktor genannt, als ob er eine tiefere Nennspannung hätte, aufgrund späterer Messung der Gewichtungsfaktor korrigiert wird. Damit wird ein Ladeverfahren geschaffen, mittels welchem die Flexibilität bezüglich der Nennspannung aufzuladender Akkumulatoren beibehalten wird, aber sichergestellt bleibt, dass jeweils der Ladevorgang optimal ist.

In einer Weiterentwicklung des erfindungsgemässen Verfahrens wird vorgeschlagen, den Ladevorgang mit einer steuerbaren Stromquelle vorzunehmen und zu Beginn des Ladevorganges, bei vorgegebenem Ladestromverlauf, den Ladespannungsverlauf zu messen. Mit dem Resultat wird die Kapazität (Ah) des eben in Ladung befindlichen Akkumulators identifiziert, und entsprechend wird die steuerbare Stromquelle für den weiteren Ladevorgang gestellt. Dies bevorzugterweise dadurch, dass je nach identifizierter Kapazität vorgegebene Ladestrom-Zeit-Verläufe durch entsprechende Führungsgrössen-Verläufe in einen Ladestromregelkreis, mit der steuerbaren Stromquelle als Stellglied, aktiviert werden.

Die obgenannte Aufgabe wird weiter durch das Ladegerät genannter Art gelöst, welches sich durch die Merkmale von Anspruch 6 auszeichnet.

Bevorzugte Ausführungsvarianten des erfindungsgemässen Verfahrens bzw. Ladegerätes sind in den Ansprüchen 2-5 bzw. 7-20 spezifiziert. Die Erfindung wird anschliessend beispielsweise anhand von Figuren erläutert.

Es zeigen:

Fig. 1    in Form eines Funktionsblock-/Signalflussdiagrammes ein nach dem erfindungsgemässen Verfahren arbeitendes Ladegerät;

Fig. 2 für ein Ladegerät nach Fig. 1 eine einfache und bevorzugte Ausführungsform einer gesteuerten Gewichtungseinheit;

Fig. 3 in Form eines Funktionsblockdiagrammes, vereinfacht, den Aufbau einer bevorzugten Ausführungsvariante des erfindungsgemässen Ladegerätes;

Fig. 4 den detaillierten Schaltplan des Ladegerätes nach Fig. 3;

Fig. 5 eine Aufsicht auf die Leiterplatine am erfindungsgemässen Ladegerät aufgebaut gemäss Fig. 4 mit Bestückung;

Fig. 6 ausgehend von der Darstellung des erfindungsgemässen Ladegerätes nach Fig. 1 dessen Weiterausbau zur Steuerung des Ladestromes je nach erkannter Kapazität eines zu ladenden Akkumulators;

Fig. 7 ausgehend von bevorzugtem Aufbau des Ladegerätes gemäss Fig. 3, in Funktionsblockdiagramm-Darstellung, dessen Weiterausbau zur Realisation einer Lade stromführung je nach Kapazität eines momentan aufzuladenden Akkumulators.

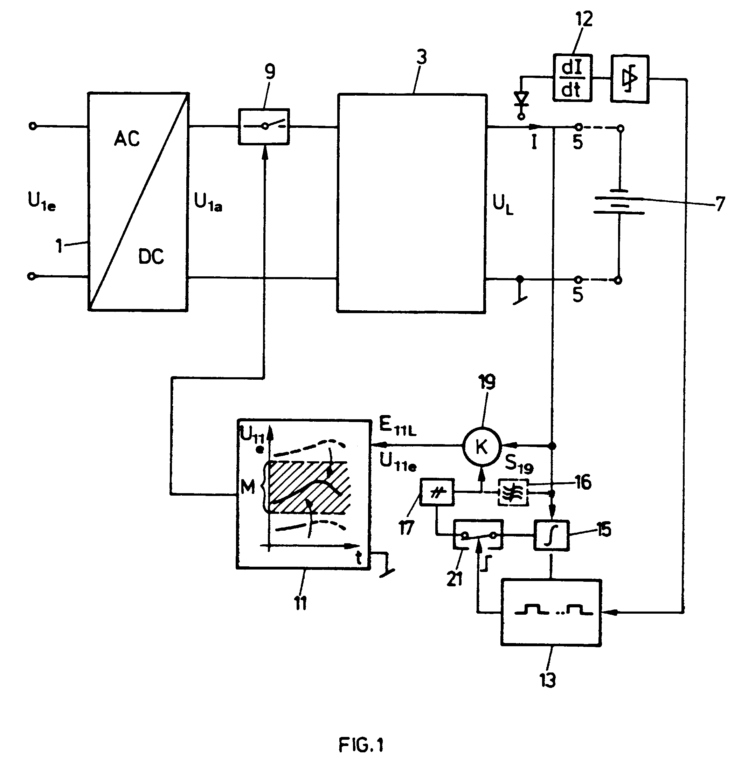

Anhand von Fig. 1 soll das prinzipielle erfindungsgemässe Vorgehen erläutert werden. Dabei wird ein nach dem erfindungsgemässen Verfahren arbeitendes Ladegerät anhand eines Signalfluss-/Funktionsblockdiagrammes vorgestellt.

Mittels eines eingangsseitigen Wechselspannungs-/Gleichspannungswandlers 1 wird die netzseitige Wechselspannung $U_{1e}$ in eine ausgangsseitige Gleichspannung $U_{1a}$ gewandelt. An einer Uebertragungseinheit 3, wie weiter unten noch zu erläutern sein wird, werden Ladeausgänge 5 gespiesen mit dem Ladestrom I, an welchen mein zu ladender Akkumulator 7 angeschlossen wird. Schematisch ist bei 9 ein Betriebsschalter für den Ladevorgang dargestellt. Es ist im weiteren eine Ueberwachungseinheit 11 vorgesehen. Ihr wird ein Signal $U_{11e}$ in Funktion der Ladespannung $U_L$, welche an den Ladeausgängen 5 bei Laden des Akkumulators 7 auftritt, an einem Eingang $E_{11L}$ zugeführt. Die Ueberwachungseinheit 11 überwacht den Ladevorgang bevorzugterweise dadurch, dass der Verlauf der Ladespannung $U_L$ in der Zeit t verfolgt und daran Erreichen vorgegebener Kriterien detektiert wird, worauf die Ueberwachungseinheit 11 ausgangsseitig über den Betriebsschalter 9 den Ladevorgang beendet.

Bevorzugterweise wird an der Ueberwachungseinheit 11 bezüglich des ihr am Eingang $E_{11L}$ zugeführten Signals $U_{11e}$ die zweite zeitliche Ableitung $d^2U_{11e}/dt^2$ ermittelt und aus dieser Grösse, der Gradienten-Ueberwachungsmethode folgend, Erreichen der Top-off-Ladephase bzw. Erhaltungsladephase detektiert. Daraufhin wird der Ladevorgang abgebrochen. Wie in Fig. 1 im Block der Ueberwachungseinheit 11 schematisch dargestellt, wird die erwähnte Grösse am Signal $U_{11e}$ optimal innerhalb eines vorgegebenen Messbereiches M ermittelt. Auf diesen Bereich M sind auch vorgesehene Komparatoren abgestimmt, welche das Erreichen vorgegebener Werte durch die für die Ueberwachung herbeigezogenen Verlaufsgrössen detektieren. Wenn nun der zu ladende Akkumulator 7, entsprechend einer tiefen Nennspannung, eine bezüglich des Bereichs M tiefe Ladespannung $U_L$ aufweist, so wird der Verlauf von $U_L$ ausserhalb des Messbereiches M liegen; Entsprechendes gilt für Akkumulatoren 7 mit hoher Nennspannung.

Es kann nun, beispielsweise durch Detektion des Einsetzens eines Ladestromes I, wie schematisch mit der Detektionseinheit 12 dargestellt, eine Zeitsteuereinheit 13 ausgelöst werden. Die Ladespannung $U_L$, z.B. und wie schematisch mit der Integrationseinheit 15 dargestellt über eine mit der Zeitsteuereinheit 13 vorgebbare Zeitspanne gemittelt,.wird z.B. erstmals zu Beginn des Ladevorganges über ein Halteglied 17 auf den Steuereingang $S_{19}$ einer Gewichtungseinheit 19 geschaltet. Dies, indem die Steuereinheit 13, wie schematisch mit der Schalteinheit 21 dargestellt, das bis dahin von der Ladespannung $U_L$ ermittelte Signal durchschaltet. Durch das Signal am Steuereingang $S_{19}$ der Gewichtungseinheit 19 wird das der Gewichtungseinheit 19 direkt zugeführte Spannungssignal $U_L$ verstärkt oder abgeschwächt, derart, dass, wie im Block 11 angedeutet, das Signal $U_{11e}$ in den Messbereich M der Ueberwachungseinheit 11 geschoben wird.

Dadurch wird erreicht, dass, unabhängig von der Nennspannung des Akkumulators 7, an der Ueberwachungseinheit 11 der Ladespannungsverlauf immer optimal überwacht wird.

Nun ist ersichtlich, dass gegebenenfalls die zu Beginn des Ladevorganges ermittelte Ladespannung $U_L$, welche auf den Steuereingang $S_{19}$ wirkt, nicht zwingend die Nennspannung des Akkumulators 7 identifiziert, weil ja der Entladezustand des Akkumulators nicht von vorneherein bekannt ist. Ist der Akkumulator 7 z.B. tiefentladen, so wird vorher an der Gewichtungseinheit 19 eine Gewichtung vorgenommen, welche den Verlauf von $U_{11e}$ so in den Messbereich M schiebt, wie wenn der Akkumulator 7 weniger entladen aber eine tiefere Nennspannung hätte. Deshalb wird vorzugsweise, wie an der Zeitsteuereinheit 13 schematisch angedeutet, in Abständen, vorzugsweise in regelmässigen Abständen, beispielsweise an der Integrationseinheit 15, ein von der dannzumal vorherrschenden Ladespannung $U_L$ abhängiges Signal gebildet und über den Steuereingang $S_{19}$ der Gewichtungsfaktor K jeweils korrigierend verstellt.

Dies führt zum Ergebnis, dass, insbesondere in den überwachten Zeitphasen gegen Ende des Ladevorganges, der Verlauf des Signals $U_{11e}$, der Nennspannung des Akkumulators 7 tatsächlich entsprechend, in den Messbereich M geschoben bleibt. Mit dem Halteglied 17 soll lediglich dargestellt sein, dass über den Steuereingang $S_{19}$ der Gewichtungsfaktor K an der Einheit 19 so lange geändert bleibt, bis über die Schalteinheit 21 ein neuer Steuersignalwert ermittelt ist.

Bereits anhand dieser Figur ist ersichtlich, dass die Steuerung des Gewichtungsfaktors K sowohl in einigen wenigen, von der Zeitsteuereinheit vorgegebenen Zeitpunkten oder Zeitabschnitten während des Ladevorganges vorgenommen werden kann oder aber kontinuierlich. Dies ist daraus ersichtlich, dass mit der Zeitsteuereinheit 13 die Abstände der Signaldurchschaltung beliebig kurz gewählt werden können. Somit ist es durchaus möglich, ohne Zeitsteuereinheit 13 und Durchschalteinheit 21, auch ohne Mittelwertsbildung an einer Einheit 15, beispielsweise über einen Tiefpassfilter direkt und kontinuierlich auf den Steuereingang $S_{19}$ zu wirken, wie dies gestrichelt in Fig. 1 über das Tiefpassfilter 16 dargestellt ist.

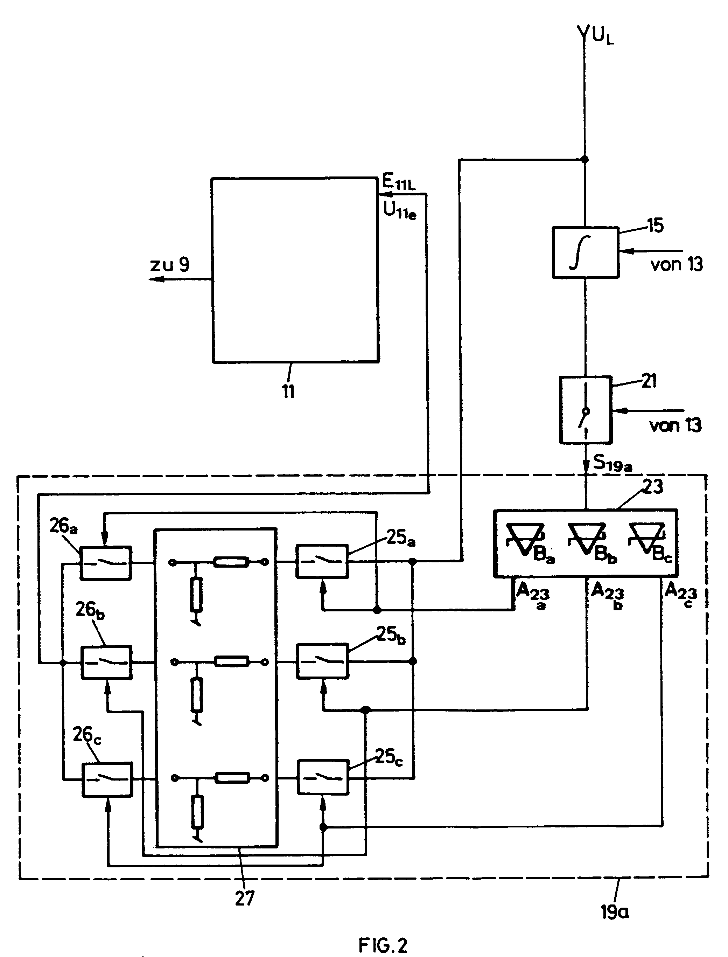

In Fig. 2 ist, ausgehend von der Darstellung von Fig. 1, eine bevorzugte Realisationsform, welche sich durch grosse Einfachheit auszeichnet, dargestellt, insbesondere was die Gewichtungseinheit 19 anbelangt.

Für die bereits anhand von Fig. 1 erläuterten Funktionsblöcke und Signale sind dieselben Bezugszeichen verwendet.

Ueber die von der Zeitsteuereinheit 13 gesteuerte Schalteinheit 21 und gegebenenfalls Mittelwertbildungseinheit 15 wird, zu den von der Zeitsteuereinheit 13 angesteuerten Zeiten, z.B. unmittelbar nach dem Beginn des Ladevorganges, die Ladespannung $U_L$ einer Komparatoreinheit 23 zugeführt. Wie schematisch dargestellt, wird daran ermittelt, in welchem von beispielsweise drei Spannungsbereichen Ba-Bc die zugeführte Spannung $U_L$ liegt, welche Bereiche durch Festlegung der Komparatorschaltgrenzen (nicht dargestellt) festgelegt sind. Bei den beispielsweise dargestellten drei Bereichen, welche an der Komparatoreinheit 23 diskriminiert werden, erscheint ausgangsseitig an einem der drei Ausgänge $A_{23a}$-$A_{23c}$ ein Signal. Die Ausgänge $A_{23}$ sind auf Schalteinheiten 25a-25c geführt und je nachdem, auf welchem der Ausgänge $A_{23}$ das Signal erscheint, wird eine dieser Schalteinheiten 25 aktiviert. Dadurch wird die Ladespannung $U_L$ auf eine Spannungsteilereinheit 27 geschaltet, woran jeder Schalteinheit 25 ein entsprechender Spannungsteiler-Wert zugeordnet ist. Ausgangsseitig wirken die Spannungsteiler über ausgangsseitige Entkopplungs-Schalteinheiten 26a-26c auf den Eingang $E_{11L}$ der Ueberwachungseinheit 11. Sich jeweils entsprechende Schalteinheiten 26 und 25 werden gleichzeitig so lange geschlossen, bis an der Komparatoreinheit 23, von der Zeitgebereinheit 13 gesteuert, ein anderer der Ausgänge $A_{23}$ signalbeaufschlagt ist.

Bei Betrachtung von Fig. 2 ist nun ohne weiteres ersichtlich, dass auch hier die Zeitsteuereinheit 13 in beliebig kurzen Zeitabständen die Schaltereinheiten 21, 25 und 26 sowie die Integrationseinheit 15 ansteuern kann. Somit ist es auch bei dieser Ausführungsvariante möglich, beispielsweise mit einem Lokaloszillator als Zeitsteuereinheit 13 und gegebenenfalls ohne Mittelwertsbildungseinheit 15, kontinuierlich den jeweils notwendigen Gewichtungsfaktor durch Aufschaltung jeweils eines der Spannungsteilerwerte einzustellen.

Beim bevorzugten Vorgehen nach Fig. 2, bei welchem die Schalteinheiten 25 bzw. 26 auf einfache Art und Weise mit Analogschaltern realisiert werden können und die Spannungsteilereinheit 27 als integrierter IC bereitgestellt werden kann, wird die dem Eingang $E_{11L}$ zugeführte Spannung bezüglich der Ladespannung $U_L$ jedenfalls abgeschwächt, so dass der Messbereich M gemäss Fig. 11 für die kleinsten zu überwachenden Ladespannungen auszulegen ist.

Dem Fachmann eröffnen sich bereits jetzt viele Möglichkeiten, das erfindungsgemässe Prinzip mit der gesteuerten Gewichtung zu realisieren.

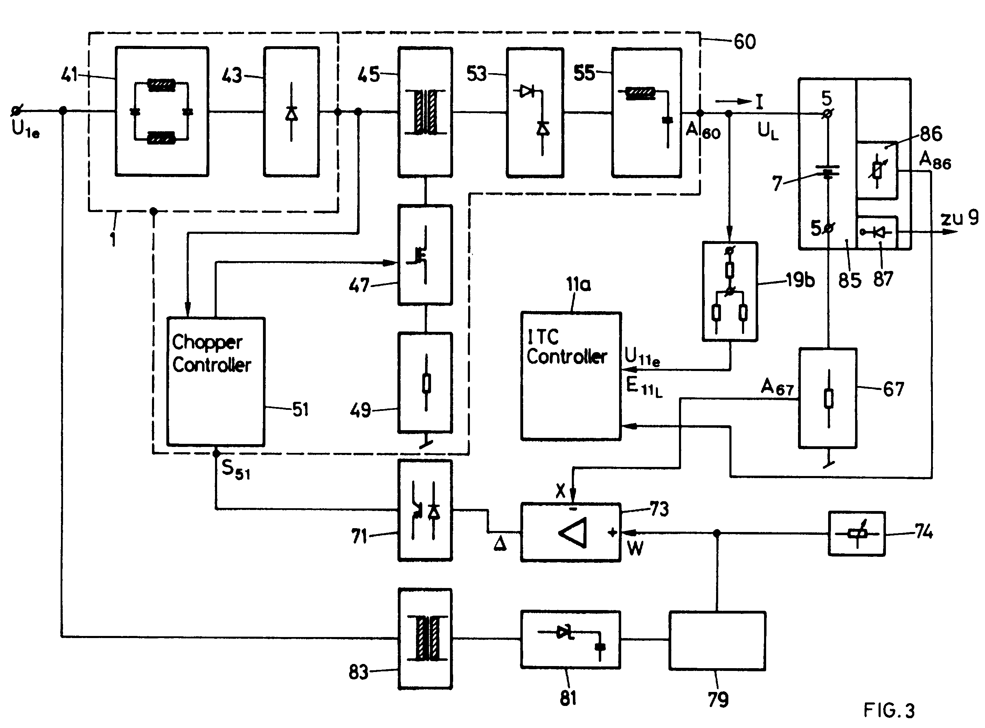

Bevor nun eine Weiterentwicklung des bis anhin vorgestellten Konzeptes erläutert wird, sollen bevorzugte Realisationsformen des bis anhin erläuterten Konzeptes vorgestellt werden. Dies soll anhand des detaillierteren Signalfluss-/Funktionsblockdiagrammes von Fig. 3 erfolgen.

Demnach wird die netzseitige Wechselspannung einem als LC-Filter ausgebildeten Bandpassfilter 41 zugeführt, darnach an einer Gleichrichtereinheit 43 gleichgerichtet. Filter 41 und Gleichrichtereinheit 43 bilden den anhand von Fig. 1 erläuterten Wechselspannungs-/Gleichspannungswandler 1. Anschliessend wird das Gleichspannungssignal, ausgangsseitig der Gleichrichtereinheit 43, primärseitig einem transformatorischen Hochfrequenzübertrager an einer Uebertragereinheit 45 zugespiesen. Das primärseitige Signal am transformatorischen Uebertrager der Einheit 45 wird mittels einer MOS-FET-Zerhackereinheit 47 mit gesteuertem Puls-Tastverhältnis (duty cycle) über eine ohmische Belastungseinheit 49 auf Referenzpotential geschaltet, beispielsweise mit einer Pulsrepetitionsfrequenz $f_{27}$ von 80kHz. Das Tastverhältnis der vorzugsweise als MOS-FET-Chopper ausgebildeten Zerhackereinheit 47 wird mittels einer Steuereinheit 51 gesteuert, welche von der Ausgangsspannung des Wandlers 1 gespiesen wird.

Das Ausgangssignal des transformatorischen Uebertragers 45 wird erst an einer Gleichrichtereinheit 53 gleichgerichtet und anschliessend an einer Filtereinheit 55 geglättet.

Es bilden als Teil der Uebertragungseinheit 3, die in Fig. 1 eingeführt wurde, die Uebertragungseinheit 45, Zerhackereinheit 47, Belastungseinheit 49, Steuereinheit 51 und Gleichrichtereinheit 53 nebst der Filtereinheit 55 die in Fig. 3 gestrichelt umrandete steuerbare Gleichstromquelle 60. An dieser Stromquelle bildet der Eingang $S_{51}$ den

Steuereingang für die Steuereinheit 51, die das Tastverhältnis an der Zerhackereinheit 47 steuert.

Der Ausgang $A_{60}$ der Stromquelle 60 ist auf den einen Ladeausgang 5 (siehe Fig. 1) zum Aufschalten des wiederaufzuladenden Akkumulators 7 geführt. Der zweite der Ausgänge 5 des Ladegerätes ist über eine Strommesseinheit 67 mit Referenzpotential verbunden. Die Ladespannung $U_L$ vom Ausgang $A_{60}$ der Stromquelle 60 ist der Gewichtungseinheit 19b zugeführt. Diese (hier nicht weiter ausgeführt) ist aufgebaut, wie in Fig. 2 dargestellt.

In Fig. 3 sind aus Uebersichtsgründen die Zeitsteuereinheit 13 von Fig. 1, die Schalteinheit 21, die Mittelwertbildungseinheit 15, die Komparatoreinheit 23, die Schaltereinheiten 25 bzw. 26 sowie, im Detail, die Spannungsteilereinheit 27 nicht weiter dargestellt. Ausgangsseitig der Gewichtungseinheit 19b wird das Signal $U_{11e}$ dem Eingang $E_{11L}$ der Ueberwachungseinheit 11a zugeführt. Wie bereits erwähnt, handelt es sich bei der Ueberwachungseinheit 11a bevorzugterweise um einen integrierten Ladecontroller-IC, insbesondere um den IC U2402B der Firma Telefunken. Der Eingang $E_{11L}$ entspricht dem "sense UBATT"-Eingang besagten ICs.

Der Ausgang $A_{67}$ der Strommesseinheit 67 wird einer Komparatoreinheit 73 zugeführt und (nicht dargestellt), sofern der obgenannte IC eingesetzt wird, seinem "sense I-Charge"-Eingang.

Der Komparatoreinheit 63 ist weiter das Ausgangssignal einer Vorgabeeinheit 74 zugeführt. An der Vorgabeeinheit 74 wird der Ladestrom-SOLL-Wert eingestellt, ihr Ausgangssignal der Komparatoreinheit 73 als Führungssignal W zugespiesen. Analog wird das Signal am Ausgang $A_{67}$ der Strommesseinheit 67, als gemessene IST-Grösse X, dem Komparator 73 zugeführt, bei Verwendung des genannten ICs über letzteren. Ausgangsseitig der Komparatoreinheit 73 erscheint ein Regeldifferenzsignal $\Delta$, welches beispielsweise über eine Optokopplereinheit 71, galvanisch getrennt, an den Steuereingang $S_{51}$ der Steuereinheit 51 gelegt ist, also an den Steuereingang der Stromquelle 60. Das Führungssignal W an der Einstelleinheit 74 wird, ausgehend von einer stabilisierten Referenzspannung, ausgangsseits eines Referenzspannungsgenerators 79 erzeugt. Der Generator 79 wird über ein separates Netzteil 81 und einen transformatorischen Uebertrager 83 von der Wechselspannung $U_{1e}$ gespiesen. An einer Aufnahme 85 für den zu ladenden Akkumulator 7 ist, vorzugsweise in Form eines NTC-Widerstandes, eine Temperaturmesseinheit 86 vorgesehen, thermisch eng mit einem zu ladenden Akkumulator gekoppelt. Das temperaturabhängige Ausgangssignal am Ausgang $A_{86}$ ist zu Ueberwachungszwecken der Ueberwachungseinheit 11a zugeführt.

Um nun zu detektieren, ob ein Akkumulator 7 tatsächlich ein Akkumulator ist oder eine nicht wiederaufladbare Batterie, ist vorzugsweise ein Detektor 87 im Bereich der Aufnahme 85 vorgesehen, der aufgrund spezifischer Zeichen am Gehäuse von Akkumulatoren bzw. Batterien, wie beispielsweise Strichcodes, spezifischer mechanischer Ausformungen des Gehäuses, wie von Einkerbungen etc., erkennt, ob der Ladevorgang zulässig ist oder nicht. Entsprechend wirkt er auf einen in Fig. 3 nicht dargestellten Ladebetriebsschalter 9 gemäss Fig. 1.

Selbstverständlich ist es ohne weiteres möglich, mit dem Detektor 87 dann die notwendigen Ueberwachungsdaten bzw. Informationen und/oder Steuerinformationen direkt der Ueberwachungseinheit 11a bzw. dem Steuereingang für die Gleichstromquelle 60 zu übermitteln, wenn an den zu ladenden Akkumulatoren, auslesbar, die entsprechende Information vorgesehen ist, wie beispielsweise kodiert an einem mittels des Detektors 87 abgetasteten Strichcode.

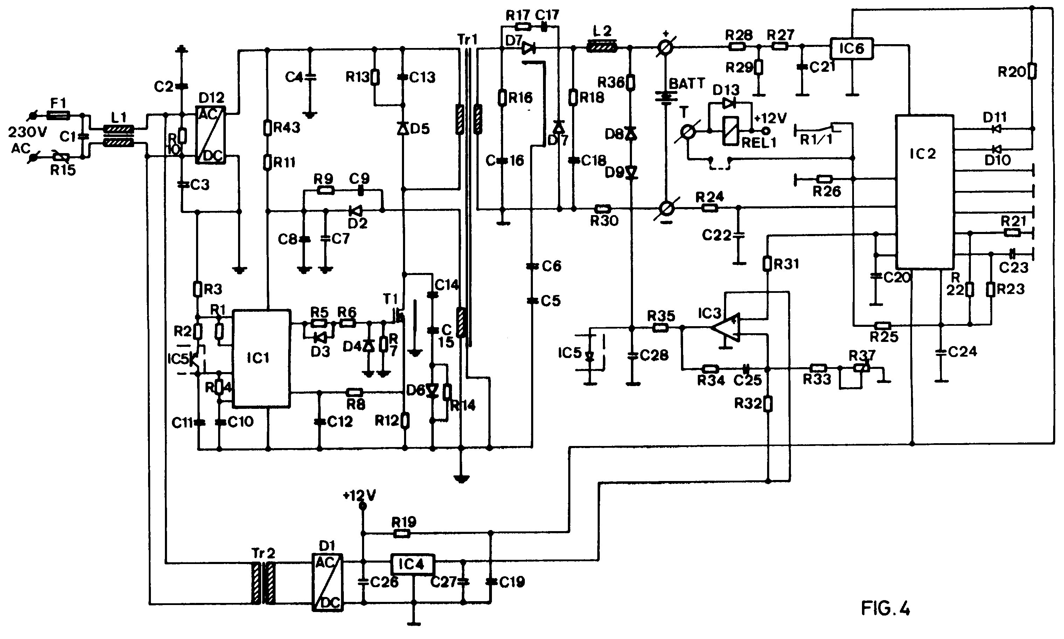

In Fig. 4 ist das Schaltschema eines nach dem Prinzip gemäss Fig. 3 aufgebauten erfindungsgemässen Ladegerätes dargestellt.

Es bezeichnen:

| R01 | Widerstand | | 10 | KOHM |
|-----|------------|---|-----|------|
| R02 | " | | 10 | KOHM |
| R03 | " | | 2.7 | KOHM |
| R04 | " | | 12 | KOHM |
| R05 | " | | 82 | OHM |
| R06 | " | | 22 | OHM |
| R07 | " | | 10 | KOHM |
| R08 | " | | 1 | KOHM |
| R09 | " | | 4,7 | OHM |
| R10 | " | | 470 | KOHM |
| R11 | " | | 56 | KOHM |
| R12 | " | | 0.39 | OHM |
| R13 | " | | 10 | KOHM |
| R14 | " | | 10 | KOHM |
| R15 | " | | 8 | OHM |
| R16 | " | | 22 | OHM |

(fortgesetzt)

| | | | | |
|---|---|---|---|---|
| R17 | " | | 47 | OHM |
| R18 | " | | 47 | OHM |
| R19 | " | | 10 | OHM |
| R20 | " | | 2.2 | KOHM |
| R21 | " | | 56 | KOHM |
| R22 | " | | 10 | KOHM |
| R23 | " | | 470 | KOHM |
| R24 | " | | 2.2 | KOHM |
| R25 | " | | 15 | KOHM |
| R26 | " | | 6.8 | KOHM |
| R27 | " | | 10 | KOHM |
| R28 | " | | 16 | KOHM |
| R29 | " | | 3.3 | KOHM |
| R30 | " | | 0.01 | OHM |
| R31 | " | | 10 | KOHM |
| R32 | " | | 100 | KOHM |
| R33 | " | | 820 | OHM |
| R34 | " | | 1.5 | KOHM |
| R35 | " | | 510 | OHM |
| R36 | " | | 2.4 | KOHM |
| R37 | Trimmer- | | 2 | KOHM |
| R43 | Widerstand | | 56 | KOHM |
| | | | | |
| C01 | Kondensator | | 0.47 | µF |
| C02 | " | | 1 | nF |
| C03 | " | | 1 | nF |
| C04 | " | | 150 | µF |
| C05 | " | | 4.7 | F |
| C06 | " | | 4.7 | F |
| C07 | " | | 100 | µF |
| C08 | " | | 100 | nF |
| C09 | " | | 10 | nF |
| C10 | " | | 4.7 | nF |
| C11 | " | | 100 | nF |
| C12 | " | | 470 | pF |
| C13 | " | | 1 | nF |
| C14 | " | | 1 | nF |
| C15 | " | | 1 | nF |
| C16 | " | | 1 | nF |
| C17 | " | | 1 | nF |
| C18 | " | | 1 | nF |
| C19 | " | | 220 | µF |
| C20 | " | | 1 | µF |
| C21 | " | | 470 | nF |
| C22 | " | | 10 | µF |
| C23 | " | | 1 | nF |
| C24 | " | | 22 | µF |
| C25 | " | | 22 | nF |
| C26 | " | | 220 | µF |
| C27 | " | | 100 | µF |
| C28 | | | 22 µF | |

(fortgesetzt)

| | | | |
|---|---|---|---|
| D01 | | Diode | DF-02M |
| D02 | | " | 1N4007 |
| D03 | | " | 1N4148 |
| D04 | | Z-Diode | ZPD22 |
| D05 | | Diode | RGP 15M |
| D06 | | " | RGP 15M |
| D07 | | " | BYW 99 PI-200/FEP 3ODP |
| D08 | | Z-Diode | ZPD22 |
| D09 | | Diode | 1N4148 |
| D10 | | LED Diode | GREEN |
| D11 | | LED Diode | RED |
| D12 | | Diode | KBU 4K |
| D13 | | " | 1N4007 |
| IC1 | SGS-THOMSON | | UC 3842N |
| IC2 | ITC | | 9504-A |
| IC6 | ITC-AR | | 9509-AR |
| IC3 | SGS/NATIONAL | | LM358 AN |
| IC4 | SGS/NATIONAL | | LM78L05 |
| IC5 | SIEMENS | | CNY17F3 |
| T01 | SGS-THOMSON | POWER MOS-FET | STH5N90 |
| REL1 | SDS | | SDS-DE1E-M |
| L01 | TIMONTA | SPOOL 2X27 HY-DFKH 2-31-1.4-27/A | |
| L02 | HARTU | THROTTLE 200025-14-10.0 A/250V-0,30MH/GKK | |
| TR1 | | TRANSFORMER FERRIT PG32/30-H7C4 | |
| TR2 | | TRANSFORMER 220V/12 V-1.5 VA - 50-60HZ | |
| F1 | | FUSE | 1.60 A T |

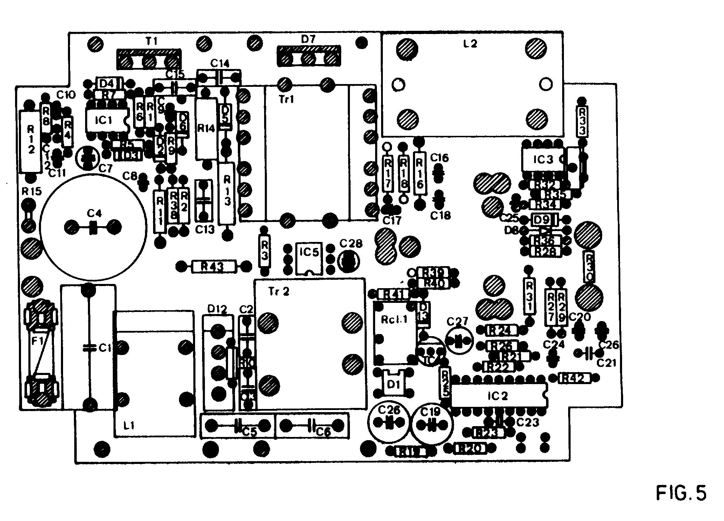

In Fig. 5 ist die Aufsicht auf eine gedruckte Schaltung zur Realisation des erfindungsgemässen Ladegerätes gemäss Fig. 4 dargestellt, mit Bestückungsangaben.

Mit den beschriebenen erfindungsgemässen Ladegeräten konnten Akkumulatoren in einem Bereich zwischen 1,2V und 14,4V, dabei insbesondere zwischen 2,4V und 14,4V, mit ca. 7,6A in einer Ladezeit von ca. 10 min. optimal geladen werden.

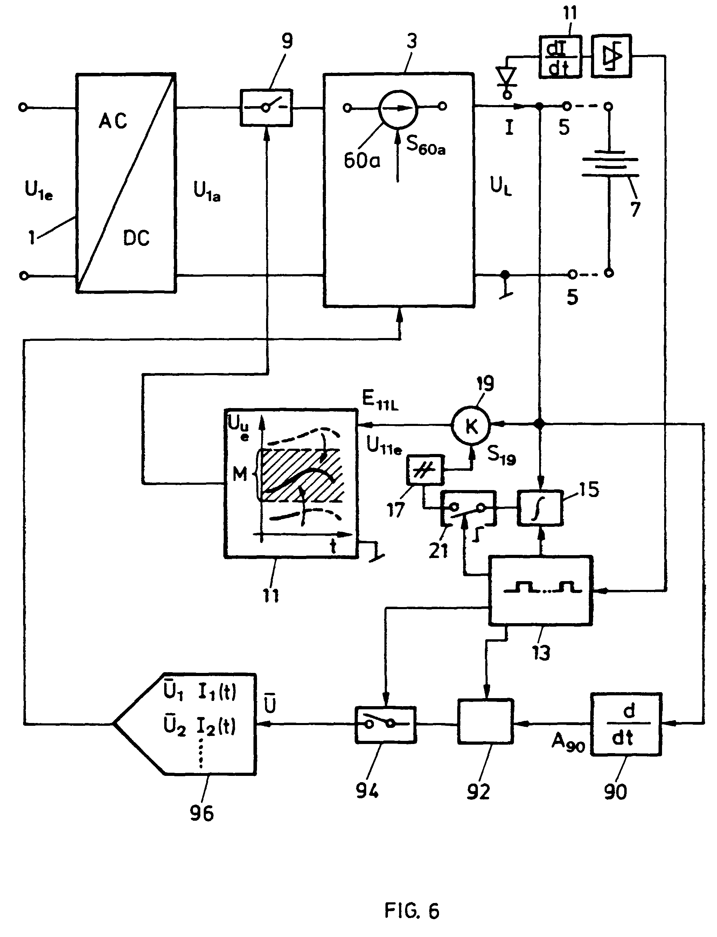

Bis anhin wurde das erfindungsgemässe Vorgehen erläutert mit Blick auf optimale Anpassung des Ladegerätes an unterschiedliche Nennspannungen eines zu ladenden Akkumulators. Das erfindungsgemässe Ladegerät bzw. Verfahren kann nun weiter zur Mitberücksichtigung unterschiedlicher Kapazitäten (Ah) des Akkumulators ausgebaut werden. Dies soll anhand von Fig. 6 erläutert werden, welche, ausgehend von der Darstellung nach Fig. 1, diese Weiterentwicklung prinzipiell darstellt.

Demnach wird die Ladespannung $U_L$, zusätzlich zu ihrer Behandlung gemäss Fig. 1, einer Differentiationseinheit 90 zugeführt, an deren Ausgang $A_{90}$ ein Signal entsprechend der Steigung der Spannung $U_L$ in der Zeit erscheint. Analog zur Mittelwertbildungseinheit 15 ist eine Mittelwertbildungseinheit 92 vorgesehen, welche, beispielsweise während der durch Zeitsteuereinheit 13 gesteuerten Zeitspanne, den Mittelwert des Differentiationsresultates bildet.

Durch die Zeitsteuereinheit 13 synchron oder asynchron zu der Schalteinheit 21 angesteuert, schaltet eine Schalteinheit 94 das Mittelwertresultat des differenzierten Signales auf eine vornehmlich als Speichereinheit wirkende Einheit 96. Das dieser Einheit 96 zugeführte Signal ist mit $\bar{U}$ bezeichnet. Je nach Wert des Signals $\bar{U}$, beispielsweise entsprechend der Anfangssteigung der Ladespannung $U_L$, gemittelt über eine vorgegebene Zeitspanne, wird an der Einheit 96 ein diesem zugeordneter, vorgegebener Ladestromverlauf $I_x(t)$ aktiviert und steuert an der Uebertragungseinheit 3 eine an einem Steuereingang $S_{60a}$ steuerbare Stromquelle 60a an. Damit wird, insbesondere aus dem Anfangsladeverhalten, auf die Kapazität des eben in Ladung befindlichen Akkumulators 7 geschlossen und dementsprechend ein für diese Kapazität optimaler Ladestromverlauf, gegebenenfalls auch konstanter Ladestromwert, an der Stromquelle 60a gestellt.

Betrachtet man nun die anhand von Fig. 3 in Funktionsblock-/Signalflussdiagrammform dargestellte Ausführungsform unter Verwendung eines Ladecontroller-ICs obgenannter Art als Ueberwachungseinheit 11a, so ist ersichtlich, dass sich die Weiterbildung nach Fig. 6 ohne weiteres darauf aufbauen lässt, indem die Stelleinheit 74 von Fig. 3 zur Führung des Ladestromes an der Stromquelle 60 durch eine Führungsverlaufs-Steuerung mit einer Einheit 96 gemäss Fig. 6 ersetzt wird.

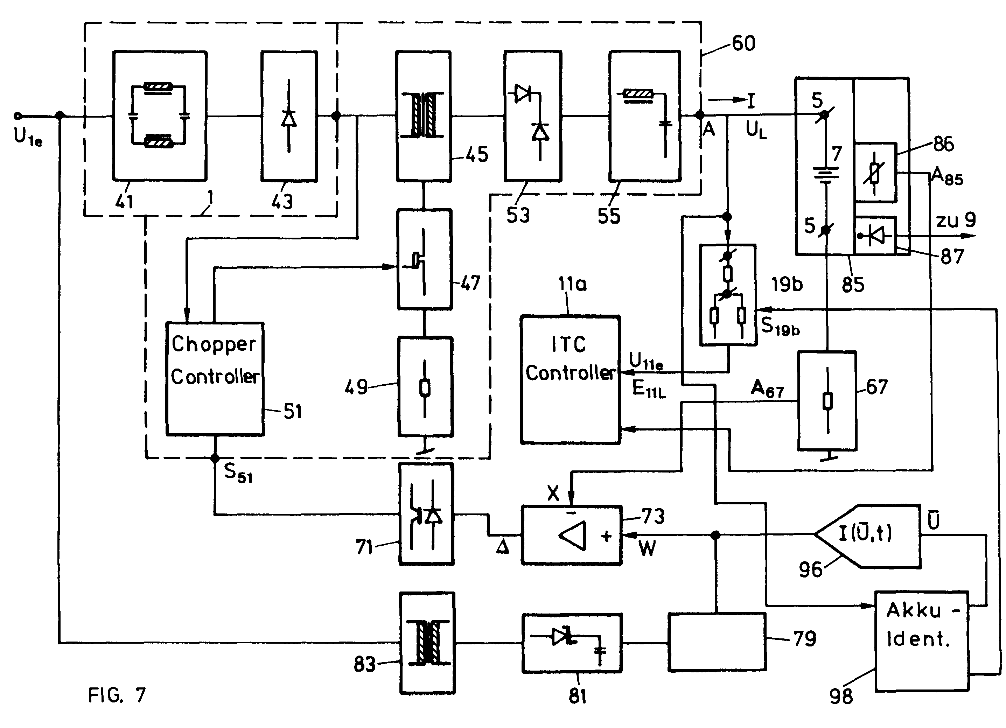

In Fig. 7 ist, ausgehend von der Realisationsform nach Fig. 3, dessen Weiterbildung gemäss Fig. 6 dargestellt.

Demnach wird die Ladespannung $U_L$ einer hier generell als Akkumulatoridentifikationseinheit bezeichneten Einheit 98 zugeführt, welche einerseits beispielsweise die Einheiten 15, 21, 23 gemäss Fig. 2 umfasst, andererseits die Einheiten 90, 92, 94 gemäss Fig. 6 sowie die Zeitsteuereinheit 13. Ausgangsseitig der Identifikationseinheit 98 erscheint einerseits, gemäss Fig. 2, das an die Gewichtungseinheit $19_b$ zugeführte Signal, andererseits das Signal $\bar{U}$, welches nun der Ladestrom-SOLL-Verlauf-Selektionseinheit 96, gemäss Fig. 6, zugeführt wird.

**Patentansprüche**

1.  Verfahren zur automatischen Anpassung eines Ladegerätes an einen zu ladenden Akkumulator (7), bei dem der Verlauf der Ladespannung ($U_L$) innerhalb eines Überwachungsbereiches (M) überwacht wird und hierzu die Ladespannung ($U_L$) so verstärkt wird, dass sie innerhalb dieses Bereiches (M) zu liegen kommt, dadurch gekennzeichnet, dass

    - die Ladespannung ($U_L$) anhand einer zeitlichen Ableitung (90, $A_{90}$) überwacht wird,

    - die Verstärkung (K, 19, $S_{19}$) der Ladespannung ($U_L$) während dem Ladevorgang nachgeführt wird.

2.  Verfahren nach Anspruch 1, dadurch gekennzeichnet, dass die Ladespannung anhand ihrer zweiten zeitlichen Ableitung überwacht wird.

3.  Verfahren nach Anspruch 1 oder 2, dadurch gekennzeichnet, dass die Verstärkung (K) kontinuierlich oder zu diskreten Zeiten des Ladevorganges nachgeführt wird.

4.  Verfahren nach einem der Ansprüche 1 bis 3, dadurch gekennzeichnet, dass der Ladevorgang mit einer steuerbaren Stromquelle (60a) vorgenommen wird, zu Beginn eines Ladevorganges und bei vorgegebenem Ladestromverlauf, die Ladespannung ($U_L$) gemessen wird und in Funktion des gemessenen Verlaufes die Stromquelle (60, 60a) für den weiteren Ladevorgang gesteuert wird.

5.  Verfahren nach Anspruch 4, dadurch gekennzeichnet, dass in Funktion des gemessenen Verlaufes ein Führungssignal für eine Regelung des Ladestromes mit der Stromquelle als Stellglied gewählt wird.

6.  Ladegerät zur Ausführung des Verfahrens nach einem der Ansprüche 1 bis 5 mit einem eingangsseitigen Wechselspannungs/Gleichspannungswandler (1), dessen Gleichspannungsausgänge mit Ladeausgängen (5) für einen Akkumulator verbunden sind, sowie mit einer Überwachungseinheit (11, 11a) für die Ladespannung ($U_L$) sowie einer zwischen die Überwachungseinheit und einem Ladespannungsabgriff zwischengeschalteten Verstärkereinheit (19), wobei die Verstärkung der Verstärkereinheit so eingestellt ist, dass das der Überwachungseinheit zugeführte Ladespannungs-abhängige Signal innerhalb eines vorgegebenen Signalwert-Bereiches liegt, zudem weisen die Überwachungseinheit eine Differentiationseinheit (90) für das zugeführte Signal und die Verstärkereinheit (19) einen Verstärkungssteuereingang auf, welcher während des Ladevorganges mit dem Ladespannungsabgriff wirkverbunden (15, 13, 21) ist.

7.  Ladegerät nach Anspruch 6, dadurch gekennzeichnet, dass eine Zeitsteuereinheit (13) zu mindestens einer vorgebbaren Zeit während eines Ladevorganges den Verstärkungssteuereingang mit dem Ladespannungsabgriff wirkverbindet.

**8.** Ladegerät nach Anspruch 6, dadurch gekennzeichnet, dass der Verstärkungssteuereingang während des Ladevorganges permanent mit dem Ladespannungsabgriff wirkverbunden ist.

**9.** Ladegerät nach einem der Ansprüche 6-8, dadurch gekennzeichnet, dass die Ueberwachungseinheit die zweite zeitliche Ableitung am zugeführten Signal bildet, vorzugsweise einen Ladecontroller-IC umfasst, vorzugsweise einen IC des Typs U2402B der Firma Telefunken.

**10.** Ladegerät nach einem der Ansprüche 6 bis 9, dadurch gekennzeichnet, dass die Verstärkereinheit (19a, 19b) ein gesteuert veränderbares Spannungsteilernetzwerk (27) umfasst.

**11.** Ladegerät nach einem der Ansprüche 6-10, dadurch gekennzeichnet, dass der Verstärkungssteuereingang über eine Komparatoreinheit (23) mit dem Ladespannungsabgriff wirkverbunden ist, die ausgangsseitig spannungsbereichspezifische Signale abgibt, in Abhängigkeit davon, in welchen von mindestens zwei an der Komparatoreinheit vorgebbaren Signalbereichen die Ladespannung ($U_L$) liegt.

**12.** Ladegerät nach einem der Ansprüche 6-11, dadurch gekennzeichnet, dass dem Ausgang des Wechselspannungs/ Gleichspannungswandlers (1) und einem Ladeausgang (5) eine steuerbare Gleichstromquelle (60, 60a) zwischengeschaltet ist und ein von der Ladespannung ($U_L$) abhängiges Signal auf den Steuereingang der Gleichstromquelle wirkt.

**13.** Ladegerät nach Anspruch 12, dadurch gekennzeichnet, dass die Ladespannung ($U_L$) auf eine Differentiationseinheit (90) geführt ist, deren Ausgang auf den Steuereingang ($S_{60a}$) der Gleichstromquelle wirkt.

**14.** Ladegerät nach Anspruch 13, dadurch gekennzeichnet, dass das Ausgangssignal der Differentiationseinheit (90) an einer Selektionseinheit (96) die Selektion aus mindestens zwei vorab gespeicherten Signalwerten oder Signalverläufen steuert, welch letztere auf den Steuereingang ($S_{60a}$) der Gleichstromquelle zugeführt sind.

**15.** Ladegerät nach Anspruch 14, dadurch gekennzeichnet, dass die Selektionseinheit (96) ausgangsseitig ein Führungssignal oder einen Führungssignalverlauf an einem Regelkreis für den Ladestrom, mit der gleichstromquelle als Stellglied, abgibt.

**16.** Ladegerät nach einem der Ansprüche 6-15, dadurch gekennzeichnet, dass dem Ausgang des Wechselspannungs/ Gleichspannungswandlers und dem einen Ladeausgang (5) eine steuerbare Gleichstromquelle zwischengeschaltet ist, welche eine impulsbreitenmodulierbare Zerhackeranordnung (51, 47) für das Stellen des Ladestromes umfasst.

**17.** Ladegerät nach einem der Ansprüche 6-16, dadurch gekennzeichnet, dass eine Strommessanordnung (67) mit dem über die Ladeausgänge (5) geführten Ladestromkreis wirkverbunden ist, deren Ausgang ($A_{67}$) auf einen Eingang einer Vergleichseinheit (73) wirkt, ebenso wie der Ausgang einer Stromvorgabeeinheit (74), wobei der Ausgang der Vergleichseinheit (73) in regelndem Sinne auf einen Stellereingang ($S_{51}$) einer Ladestromquelle (60) wirkt.

**18.** Ladegerät nach einem der Ansprüche 6-17, dadurch gekennzeichnet, dass für Akkumulatoren in einem Nennspannungsbereich von 1,2V-14,4V, vorzugsweise von 2,4V-14,4V, die Ladezeitspanne im wesentlichen gleich ist, vorzugsweise ca. 10 min. beträgt.

**19.** Ladegerät nach einem der Ansprüche 6-18, dadurch gekennzeichnet, dass eine Temperaturmesseinrichtung (86) für den zu ladenden Akkumulator vorgesehen ist, deren Ausgang ($A_{86}$) auf die Ueberwachungseinheit wirkt und/ oder auf den Stellereingang einer Ladestromquelle (60).

**20.** Ladegerät nach einem der Ansprüche 6-19, dadurch gekennzeichnet, dass es eine Aufnahme für einen zu ladenden Akkumulator umfasst, und dass eine Detektoranordnung (87) an der Aufnahme vorgesehen ist, welche, optisch und/oder mechanisch, Kennzeichen an einem Akkumulator detektiert, wobei der Ausgang der Detektoreinheit (87) auf einen Ladebetriebsschalter und/oder auf die Ueberwachungseinheit am Ladegerät für die Ueberwachung des Ladevorganges wirkt.

**Claims**

1.  A process for automatically adjusting a battery charger to a storage battery (7) to be charged, wherein the development of the charging voltage ($U_L$) is monitored within a monitoring range (M) and wherein, for this purpose, the charging voltage ($U_L$) is boosted so that it falls within that range (M), characterised in

    that the charging voltage ($U_L$) is monitored via a derivative with respect to time (90, $A_{90}$),

    the boosting (K, 19, $S_{19}$) of the charging voltage ($U_L$) is adjusted during the charging operation.

2.  The process according to Claim 1, characterised in that the charging voltage is monitored via its second derivative with respect to time.

3.  The process according to Claim 1 or 2, characterised in that the boosting (K) is adjusted continuously or at discrete times of the charging operation.

4.  The process according to any one of Claims 1 to 3, characterised in that the charging operation is carried out with an adjustable current source (60a); the charging voltage ($U_L$) is measured at the beginning of the charging operation and with a preset time dependency of the charging current; and, depending upon the measured course, the current source (60, 60a) is adjusted for the further charging operation.

5.  The process according to Claim 4, characterised in that, depending upon the measured course, there is generated an adjustment signal for negative feedback controlling the charging current with the current source as the adjusting element.

6.  A charger unit for practising the process according to any one of Claims 1 to 5, with an input ac/dc converter (1) the dc outputs of which being connected to the charging outputs (5) for a storage battery, and with a monitoring unit (11,11a) for the charging voltage ($U_L$) and with a booster unit (19) interconnected between the monitoring unit and a charging voltage terminal, wherein the boosting of the booster unit is adjusted so that the charging-voltage dependent signal input to the monitoring unit is within a preset signal value range, and, additionally, the monitoring unit has a differentiating stage (90) for the input signal and the booster unit (19) has a booster adjusting input which is operatively connected (15, 13, 21) to the charging voltage terminal during the charging operation.

7.  The charger unit according to Claim 6, characterised in that a time control unit (13) operatively connects the booster adjusting input to the charging voltage terminal at least at a predeterminable time during a charging operation.

8.  The charger unit according to Claim 6, characterised in that the booster adjusting input is operatively permanently connected to the charging voltage terminal during the charging operation.

9.  The charger unit according to any one of Claims 6 - 8, characterised in that the monitoring unit forms the second time derivative of the input signal, preferably comprises a Charging-Controller Integrated circuit [IC], preferably an IC of the type U2402B of the Company Telefunken.

10. The charger unit according to any one of Claims 6 - 9, characterised in that the booster unit (19a, 19b) comprises a controllably adjustable voltage divider network (27).

11. The charger unit according to any one of Claims 6 - 10, characterised in that the booster adjusting input is operatively connected to the charging voltage terminal via a comparator stage (23) which outputs voltage-range specific signals in dependence upon in which of at least two signal ranges, presettable at the comparator stage, the charging voltage resides.

12. The charger unit according to any one of Claims 6 - 11, characterised in that an adjustable dc current source (60, 60a) is interconnected between the output of the ac/dc converter (1) and a charging output (5) and that a charging-voltage ($U_L$) dependent signal is applied to the adjusting input of the dc source.

13. The charger unit according to Claim 12, characterized in that the charging voltage ($U_L$) is applied to a differentiating stage (90) the output of which acting on the adjusting input ($S_{60a}$) of the dc current source.

**14.** The charger unit according to Claim 13, characterised in that the output signal of the differentiating unit (90) controls at a selection stage (96) selection out of at least two prestored signal values or signal courses which latter are led to the adjusting input ($S_{60a}$) of the dc current source.

**15.** The charger unit according to Claim 14, characterised in that the selection stage (96) outputs a command signal or a command signal course to a negative feedback control circuit for the charging current, with the dc current source acting as adjusting element.

**16.** The charger unit according to any one of Claims 6 - 15, characterised in that an adjustable dc current source is interconnected between the output of the ac/dc converter and the one charging output (5), which current source comprises a pulse-width modulatable chopper arrangement (51, 47) for adjusting the charging current.

**17.** The charger unit according to any one of Claims 6 - 16, characterised in that a current-measuring stage (67) is operatively connected to the charging current circuit including the charging outputs (5), the output (A67) of the current-measuring stage acting upon an input of a comparator stage (73 ) as well as does the output of a current-setting stage (74), whereby the output of the comparator stage (73) acts in negative feedback loop manner on a adjusting input ( $S_{51}$) of a charging current source (60).

**18.** The charger unit according to any one of Claims 6 - 17, characterised in that the charging period is substantially the same, preferably about 10 min, for storage batteries with a nominal voltage range of 1.2V - 14.4 V and preferably of 2.4 V - 14.4 V.

**19.** The charger unit according to any one of Claims 6 - 18, characterised in that for the storage battery to be charged there are provided temperature-measuring means (86) the output (A86) of which acting upon the monitoring unit and/or the adjusting input of a charging-current source (60).

**20.** The charger unit according to any one of Claims 6 - 19 characterised in that it comprises a receptacle for a storage battery to be charged and that at the receptacle there is provided a detector arrangement (87) which optically and/ or mechanically, detects indicia on a storage battery, wherein the output of the detector arrangement (87) acts upon a charging-operation switch and/or upon the monitoring unit at the charger unit for monitoring the charging operation.

## Revendications

**1.** Procédé pour l'adaptation automatique d'un chargeur à un accumulateur à charger (7), selon lequel la courbe de la tension de charge ($U_L$) est surveillée à l'intérieur d'une plage de surveillance (M) et à cet effet, la tension de charge ($U_L$) est amplifiée de manière à venir se situer à l'intérieur de cette plage (M), caractérisé

- en ce que la tension de charge ($U_L$) est surveillée à l'aide d'une dérivée temporelle (90, $A_{90}$),
- et en ce que l'amplification (K, 19, $S_{19}$) de la tension de charge ($U_L$) est ajustée pendant l'opération de charge.

**2.** Procédé selon la revendication 1, caractérisé en ce que la tension de charge est surveillée à l'aide de sa seconde dérivée temporelle.

**3.** Procédé selon la revendication 1 ou 2, caractérisé en ce que l'amplification (K) est ajustée de manière continue ou à des moments discrets de l'opération de charge.

**4.** Procédé selon l'une des revendications 1 à 3, caractérisé en ce que l'opération de charge est réalisée avec une source de courant (60a) apte à être commandée et qu'au début d'une opération de charge et en présence d'une courbe prédéfinie du courant de charge, la tension de charge ($U_L$) est mesurée et en fonction de la courbe qui est mesurée, la source de courant (60, 60a) est commandée pour la suite de l'opération de charge.

**5.** Procédé selon la revendication 4, caractérisé en ce que, en fonction de la courbe qui est mesurée, un signal de guidage est choisi pour une régulation du courant de charge, avec la source de courant comme élément de réglage.

**6.** Chargeur pour mettre en oeuvre le procédé selon l'une des revendications 1 à 5, comportant un convertisseur tension alternative/tension continue (1), côté entrée, dont les sorties de tension continue sont reliées à des sorties de charge (5) prévues pour un accumulateur, une unité de surveillance (11, 11a) pour la tension de charge ($U_L$) et une unité d'amplification (19) montée entre l'unité de surveillance et une prise de tension de charge, étant précisé que l'amplification de l'unité d'amplification est réglée pour que le signal dépendant de la tension de charge qui est amené à l'unité de surveillance se trouve à l'intérieur d'une plage de signaux de mesure prédéfinie, l'unité de surveillance comportant une unité de différentiation (90) pour le signal amené, et l'unité d'amplification (19) comportant une entrée de commande d'amplification qui est en relation fonctionnelle (15, 13, 21) avec la prise de tension de charge pendant l'opération de charge.

**7.** Chargeur selon la revendication 6, caractérisé en ce qu'une unité de synchronisation (13), à au moins un moment d'une opération de charge apte à être prédéfini, établit une relation fonctionnelle entre l'entrée de commande d'amplification et la prise de tension de charge.

**8.** Chargeur selon la revendication 6, caractérisé en ce que pendant l'opération de charge, l'entrée de commande d'amplification est en permanence en relation fonctionnelle avec la prise de tension de charge.

**9.** Chargeur selon l'une des revendications 6 à 8, caractérisé en ce que l'unité de surveillance forme la seconde dérivée temporelle au niveau du signal amené, et comprend de préférence un circuit intégré de régulateur de charge, de préférence un circuit intégré du type U2402B de la société Telefunken.

**10.** Chargeur selon l'une des revendications 6 à 9, caractérisé en ce que l'unité d'amplification (19a, 19b) comprend un réseau diviseur de tension (27) variable de manière commandée.

**11.** Chargeur selon l'une des revendications 6 à 10, caractérisé en ce que l'entrée de commande d'amplification est en relation fonctionnelle, par l'intermédiaire d'une unité de comparaison (23), avec la prise de tension de charge qui émet, côté sortie, des signaux spécifiques pour la plage de tension en fonction de celle des deux plages de signaux ou plus, aptes à être prédéfinies au niveau de l'unité de comparaison, dans laquelle se trouve la tension de charge ($U_L$).

**12.** Chargeur selon l'une des revendications 6 à 11, caractérisé en ce qu'une source de courant continu (60, 60a) apte à être commandée est montée entre la sortie du convertisseur tension alternative/tension continue (1) et une sortie de charge (5), et un signal dépendant de la tension de charge ($U_L$) agit sur l'entrée de commande de la source de courant continu.

**13.** Chargeur selon la revendication 12, caractérisé en ce que la tension de charge ($U_L$) est amenée à une unité de différentiation (90) dont la sortie agit sur l'entrée de commande ($S_{60a}$) de la source de courant continu.

**14.** Chargeur selon la revendication 13, caractérisé en ce que le signal de sortie de l'unité de différentiation (90) commande, au niveau d'une unité de sélection (96), la sélection à partir d'au moins deux valeurs de signaux ou courbes de signaux, mises en mémoire préalablement, qui sont amenées à l'entrée de commande ($S_{60a}$) de la source de courant continu.

**15.** Chargeur selon la revendication 14, caractérisé en ce que l'unité de sélection (96) émet côté sortie un signal de guidage ou une courbe de signal de guidage au niveau d'un circuit régulateur pour le courant de charge, avec la source de courant continu comme élément de réglage.

**16.** Chargeur selon l'une des revendications 6 à 15, caractérisé en ce qu'il est prévu, entre la sortie du convertisseur tension alternative/tension continue et l'une des sorties de charge (5), une source de courant continu apte à être commandée qui comprend un dispositif de découpage à durée d'impulsions modulable (51, 47) pour le réglage du courant de charge.

**17.** Chargeur selon l'une des revendications 6 à 16, caractérisé en ce qu'il est prévu, en relation fonctionnelle avec le circuit de courant de charge qui passe par les sorties de charge (5), un dispositif formant ampèremètre (67) dont la sortie ($A_{67}$) agit sur une entrée d'une unité de comparaison (73), de même que la sortie d'une unité de prédéfinition de courant (74), la sortie de l'unité de comparaison (73) agissant dans le sens d'une régulation sur une entrée de réglage ($S_{51}$) d'une source de courant de charge (60).

**18.** Chargeur selon l'une des revendications 6 à 17, caractérisé en ce que pour des accumulateurs dans une plage de tension nominale de 1,2V-14,4V, de préférence de 2,4V-14,4V, la durée de charge est globalement la même et est de préférence de 10 minutes.

**19.** Chargeur selon l'une des revendications 6 à 18, caractérisé en ce qu'il est prévu pour l'accumulateur à charger un dispositif formant thermomètre (86) dont la sortie ($A_{86}$) agit sur l'unité de surveillance et/ou sur l'entrée de réglage d'une source de courant de charge (60).

**20.** Chargeur selon l'une des revendications 6 à 19, caractérisé en ce qu'il comporte un logement pour un accumulateur à charger et en ce qu'il est prévu au niveau du logement un dispositif de détection (87) qui détecte par voie optique et/ou mécanique des marques distinctives prévues sur un accumulateur, la sortie de l'unité de détection (87) agissant sur un interrupteur de service de charge et/ou sur l'unité de surveillance prévue sur le chargeur pour surveiller l'opération de charge.

FIG.1

FIG.2

FIG. 3

EP 0 692 859 B1

FIG. 4

FIG.5

EP 0 692 859 B1

18

FIG. 6

FIG. 7